# DEMANDE DE BREVET EUROPEEN

(11) **EP 4 447 276 A1**
(43) Date de publication de la demande: **16.10.2024**
(21) Numéro de dépôt: 24170109.3
(22) Date de dépôt: 12.04.2024
(51) Int. Cl.: H02K 1/276, H02K 15/00, H02K 15/03

(54) **MACHINE ELECTRIQUE A EXTRACTION D'AIMANT PERMANENT FACILITEE ET OUTILLAGE UTILISE POUR L'EXTRACTION**

(30) Priorité: 14.04.2023 FR 2303749
(71) Demandeur: COMMISSARIAT À L'ÉNERGIE ATOMIQUE ET AUX ÉNERGIES ALTERNATIVES, 75015 Paris (FR)
(72) Inventeur: DELETTE, Gérard, 38054 Grenoble cedex 09 (FR); DAYDE, Hugo, 38054 Grenoble cedex 09 (FR)
(74) Mandataire: Atout PI Laplace

(57) **Abrégé**

Une machine électrique à rotor à aimants permanents encastrés et à extraction d'aimant facilitée comprenant un rotor (14) capable de tourner autour d'un axe de rotation (16) par rapport à un stator. Le rotor comprenant un circuit magnétique (22) en forme de corps et plusieurs aimants permanents (20). Chaque aimant permanent (20) s'étend selon l'axe de rotation, présent une forme générale de section radiale et disposé dans une cavité (26) du circuit magnétique (22). Chaque aimant permanent (20) comprend au moins une amorce de rupture (32, 34, 36, 38) s'étendant parallèlement à l'axe de rotation et divisant la surface extérieure (31) de l'aimant permanent (20) en une partie (20a) collée au circuit magnétique (22) via une lumière (28,30) et une autre partie (20b) non collée et plus facile à extraire.

## Description

L'invention concerne les machines électriques utilisées dans des domaines très variés tels que le transport, l'industrie, la génération électrique... De plus en plus de machines électriques à aimants permanents sont mises en oeuvre. Ces machines permettent notamment d'éviter le recours aux rotors bobinés nécessitant un raccordement électrique.

Les aimants permanents sont réalisés en matériaux ferromagnétiques dit durs, c'est-à-dire présentant un cycle d'hystérésis large. Au milieu du XXième siècle des alliages fer-nickel-aluminium auxquels on peut ajouter du cobalt ont contribué à l'essor des aimants permanents. Plus récemment l'utilisation de certaines terres rares, notamment de la famille des lanthanides tels que le samarium, le cérium et le néodyme ont permis d'augmenter nettement les champs coercitifs de désaimantation des aimants. Aujourd'hui, des alliages de néodyme-fer-bore (NdFeB) sont largement mis en oeuvre.

Afin de limiter l'emploi de ressources naturelles, on cherche à recycler au maximum les équipements complexes arrivés en fin de vie. Pour ce faire, il est nécessaire de séparer les différents composants des équipements afin de traiter séparément ces composants, chacun par une filière de recyclage qui lui est propre.

Le recyclage des disques durs informatiques contenant des aimants de type NdFeB a été très étudié. Une technique de décrépitation sous hydrogène conduisant à la fragmentation des disques durs permet de séparer et récupérer les aimants sous forme de poudre.

Les moteurs électriques de traction ont récemment beaucoup progressé, notamment dans l'automobile. L'augmentation de la vitesse de rotation des machines électriques utilisées, notamment comme moteurs dans l'automobile, pose des problèmes de maintien mécanique des aimants dans les rotors qui en sont équipés. Pour assurer ce maintien mécanique, le montage des aimants en surface est souvent remplacé par un montage enterré à l'intérieur de paquets de tôles formant un circuit magnétique assurant le guidage du flux magnétique généré par les aimants. Pour le recyclage de ces nouvelles machines électriques de traction, l'approche mise en oeuvre pour les disques durs informatique n'est pas applicable du fait de la masse beaucoup plus importante de l'ordre de plusieurs kg d'aimants de type NdFeB et du fait de la fixation des aimants dans les paquets de tôle par une accroche adhésive (à l'aide de résines) et par une accroche mécanique (picots, poinçons). Pour ces moteurs, le retrait des aimants nécessite de compenser l'adhésion et le maintien mécanique des aimants insérés dans les paquets de tôles. Les aimants doivent donc être extraits par des moyens mécaniques combinés à des traitements thermiques permettant de réduire l'accrochage des résines. Les traitements thermiques sont contraignants car réalisés sur des moteurs entiers avec comme objectif de dégrader les colles utilisées pour la fixation des aimants et de démagnétiser les aimants pour réduire les forces magnétiques qui bloquent les aimants ou tendent à les agglomérer. Dans certaines machines électriques où les aimants sont encastrés, lors de la fabrication, au sein des tôles internes des rotors, pour extraire les aimants, il est nécessaire de mettre en oeuvre des moyens mécaniques importants tels que des éjecteurs mus par une presse hydraulique. Ces moyens mécaniques nécessitent des investissements importants difficiles à supporter par les filières de recyclage. De plus, ce type investissement ne peut être rentabilisé qu'avec une standardisation dans la topologie des machines électriques et la mise en place d'une filière en amont pour augmenter les volumes.

Par ailleurs, les efforts mécaniques mis en oeuvre peuvent impacter la qualité des aimants récupérés compte tenu de la fragilité des matériaux de ceux-ci.

. Enfin, la présence de résine de collage résiduelle, en surface des aimants après extraction, réduit la valeur des aimants car elle constitue une source de pollution lors des étapes de recyclage des aimants. Une étape de surfaçage des aimants et donc nécessaire à l'issue de l'extraction mais cette opération est compliquée si les aimants sont endommagés ou fragmentés. Pour toutes ces raisons techniques et l'absence de réglementation contraignante, le recyclage des aimants en fin de vie, notamment ceux issus des moteurs à aimants enterrés, n'est pas développé à grande échelle malgré le potentiel en terme de valorisation des matières critiques.

L'invention vise à faciliter le recyclage des machines électrique à aimants permanents en proposant une alternative au montage classique des aimants permanents dans leur circuit magnétique. L'invention vise à faciliter la désolidarisation des aimants lors du recyclage des machines électriques lorsque celle-ci sont arrivées en fin de vie tout en assurant un maintien mécanique suffisant lors du fonctionnement des machines électriques. L'invention peut être mise en oeuvre pour tout type d'aimant permanent, quel que soit le matériau qui le compose. Les circuits magnétiques dans lesquels les aimants sont fixés peuvent être réalisés sous forme d'empilement de tôles ou de façon monobloc.

A cet effet, l'invention a pour objet une machine électrique à rotor à aimants permanents encastrés et à extractions d'aimants facilitée, le rotor pouvant tourner autour d'un axe de rotation par rapport à un stator de la machine électrique, le rotor comprenant un circuit magnétique et au moins un aimant permanent, le circuit magnétique étant configuré pour guider le flux magnétique généré par l'aimant permanent, l'aimant permanent s'étendant selon l'axe de rotation et présentant une forme générale de section radiale adaptée à générer le flux magnétique, le circuit magnétique comprenant une cavité configurée pour contenir l'aimant permanent, la cavité étant au contact de l'aimant permanent, dans laquelle l'aimant permanent comprend au moins une amorce de rupture, s'étendant parallèlement à l'axe de rotation et permettant la rupture de l'aimant permanent lorsqu'il est soumis à un effort ou à un choc donné s'exerçant dans une direction parallèle à l'axe de rotation l'amorce de rupture divisant une surface extérieure de l'aimant permanent en deux parties,
et dans laquelle, l'aimant permanent est maintenu au circuit magnétique par collage sur une des parties seulement de la surface extérieure de l'aimant permanent.

Avantageusement, l'amorce de rupture est une irrégularité de forme dans la surface extérieure de l'aimant permanent.

Avantageusement, l'irrégularité de forme est une encoche dans la surface extérieure de l'aimant permanent.

Avantageusement, le circuit magnétique comprend au moins une lumière s'ouvrant sur la cavité, dans la lumière une surface extérieure de l'aimant permanent est à distance du circuit magnétique de façon à former une barrière au flux magnétique généré par l'aimant permanent,
dans laquelle, l'aimant permanent comprend deux encoches s'étendant parallèlement à l'axe de rotation et formant une amorce de rupture permettant la rupture de l'aimant permanent lorsqu'il est soumis à un effort ou à un choc donné s'exerçant dans une direction parallèle à l'axe de rotation, les deux encoches étant situées au voisinage immédiat de bords de la lumière,
et dans laquelle l'aimant permanent est maintenu au circuit magnétique par collage dans la lumière.

Le rotor peut comprendre plusieurs circuits magnétique empilés selon l'axe de rotation, chacun des circuits magnétiques contenant au moins une série de deux aimants permanents identiques alignés parallèlement à l'axe de rotation,
les aimants permanents comprenant au moins une amorce de rupture s'étendant parallèlement à l'axe de rotation et permettant la rupture des aimants permanents lorsqu'ils sont soumis à un effort ou à un choc donné s'exerçant dans une direction parallèle à l'axe de rotation,
les aimants permanents étant maintenus au circuit magnétique par collage d'un côté seulement de l'amorce de rupture.

L'invention a également pour objet un outillage configuré pour rompre un aimant permanent d'une machine électrique selon l'invention, l'outillage comprenant au moins une dent configurée pour prendre appui sur l'aimant permanent au niveau d'une zone où l'aimant permanent est prévu pour se rompre.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement en perspective une machine électrique selon l'invention
la figure 2 représente en coupe partielle un rotor de la machine électrique de la figure 1 ;
la figure 3 représente en coupe un aimant permanent du rotor de la figure 2 ;
la figure 4 représente un exemple d'outillage permettant de faciliter la rupture des aimants permanents tels que représentés en figure 3 afin de les extraire en partie ;
la figure 5 représente un circuit magnétique du rotor et l'outillage de la figure 4 ;
la figure 6 représente en vue éclatée une variante de rotor de la machine électrique de la figure 1 ;
la figure 7 représente le rotor de la figure 6 une fois assemblé.

Par souci de clarté, les mêmes éléments porteront les mêmes repères dans les différentes figures.

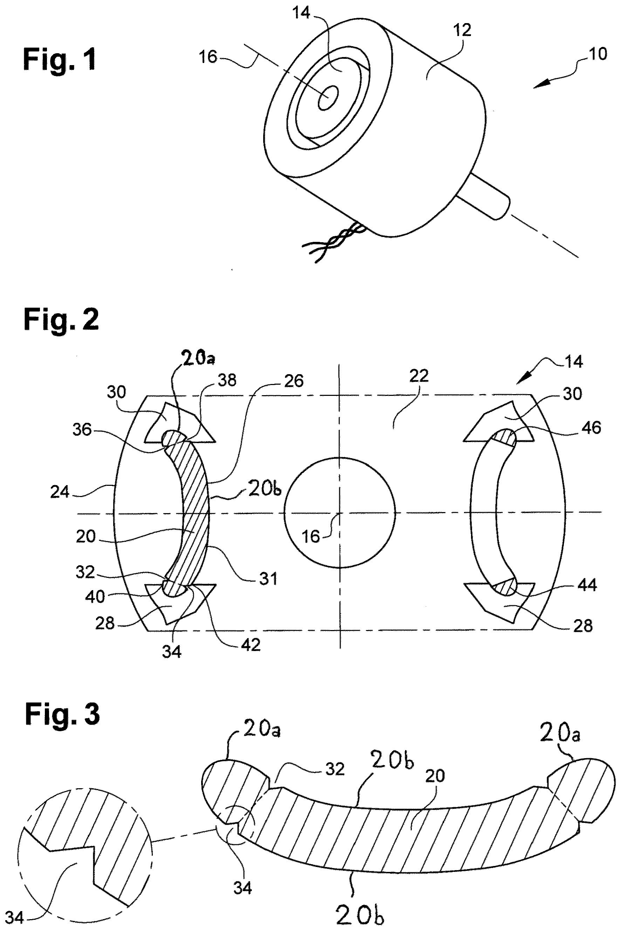

La figure 1 représente en perspective une machine électrique 10 comprenant un stator 12 et un rotor 14 pouvant tourner par rapport au stator autour d'un axe de rotation 16. Dans l'exemple représenté, le rotor 14 est un rotor interne et le stator 12 est externe. Il est également possible de mettre en oeuvre l'invention dans une machine électrique à rotor externe et stator interne.

Le stator 12 comprend un bobinage pouvant être alimenté en courant multi phasé, typiquement en triphasé et produisant un champ magnétique tournant à la fréquence d'alimentation. Le rotor 14 comprend un ou plusieurs aimants permanents produisant un champ magnétique tournant avec le champ magnétique du stator lors de la rotation du rotor 14 autour de son axe de rotation 16.

La machine électrique 10 peut fonctionner en moteur en transformant de l'énergie électrique en énergie mécanique ou en générateur en transformant de l'énergie mécanique en énergie électrique.

La figure 2 permet d'illustrer le montage d'un aimant permanent 20 dans le rotor 14 de la machine électrique 10. La figure 2 représente en coupe partielle le rotor 14 dans un plan perpendiculaire à l'axe de rotation 16.

La machine électrique 10 comprend un circuit magnétique 22 dans lequel sont disposés un ou plusieurs aimants permanents 20 répartis radialement autour de l'axe 16. Dans le cas d'une pluralité d'aimants permanents 20 ceux-ci sont identiques et un seul est représenté sur la partie gauche de la figure 2. Lors du fonctionnement de la machine électrique 10, le champ magnétique généré par les différents aimants permanents 20 s'accroche au champ magnétique tournant généré au stator 12. Le circuit magnétique 22 canalise le champ magnétique généré par les aimants permanents 20.

Les aimants permanents 20 peuvent être disposés dans des encoches du circuit magnétique 22 et affleurer à la surface extérieure du rotor 14 en regard du stator. Alternativement les aimants permanents 20 peuvent être enterrés dans le circuit magnétique 22. Cette disposition permet notamment d'augmenter la vitesse de rotation de la machine électrique 10 en évitant le risque de décollement des aimants permanents 20 du circuit magnétique 22. La disposition à aimants enterrés permet également de créer un couple reluctant par un effet de saillance qui permet d'assister le couple généré par les aimants et contribue à l'augmentation de la vitesse de la machine électrique. Entre ces deux alternatives, il est également possible de prévoir des aimants permanents 20 en partie enterrés et en partie affleurant.

L'aimant permanent 20 représenté sur la figure 2 n'affleure pas de la surface extérieure 24 du rotor 14 et possède une section dont une partie de forme concave s'ouvre en direction du stator 12, c'est-à-dire vers le haut de la figure 2, ceci afin de créer une concentration de flux magnétique et une induction plus élevée dans l'entrefer entre le rotor14 et le stator 12. La section de l'aimant permanent 20 est constante sur la majeure partie de la longueur du rotor 14 définie selon l'axe de rotation 16.

Le circuit magnétique 22 comprend une cavité 26 configurée pour contenir l'aimant permanent 20. La cavité 26 est au contact de l'aimant permanent 20. Plus précisément la forme de la cavité 26 est complémentaire au moins en partie de la forme de l'aimant permanent 20. Comme pour l'aimant permanent 20, la section de la cavité perpendiculairement à l'axe 16 est constante sur la majeure partie de la longueur du circuit magnétique 22, longueur définie selon l'axe de rotation 16.

le circuit magnétique 22 peut comprendre une ou plusieurs lumières s'ouvrant sur la cavité 26. Dans l'exemple représenté, le circuit magnétique 22 comprend deux lumières 28 et 30. Dans chacune des lumières 28 et 30, la surface extérieure 31 de l'aimant permanent 20 est à distance du circuit magnétique 22. Les lumières 28 forment une barrière au flux magnétique généré par l'aimant permanent 20. Autrement dit, le flux magnétique généré par l'aimant permanent 20 tend à contourner majoritairement les lumières pour se concentrer dans le circuit magnétique 22 dont la perméabilité est beaucoup plus forte que celle du vide ou de l'air contenu dans les lumières 28 et 30.

La forme générale de l'aimant permanent 20 et celle du circuit magnétique 22 sont définies en combinaison avec le stator 12 pour optimiser le cheminement des flux magnétiques dans la machine électrique. La forme en partie concave de la section de l'aimant permanent 20 et la présence éventuelle des lumières 28 et 30 sont notamment adaptées à cette optimisation.

L'aimant permanent 20 est fixé au circuit magnétique 22 par collage. En fin de vie de la machine électrique 10, il est utile d'extraire l'aimant permanent 20 du circuit magnétique 22. Afin de faciliter son extraction, l'aimant permanant 20 n'est pas collé sur toute la surface interne de la cavité 26 dans laquelle il est disposé. Il serait possible de ne disposer que quelques points de colle entre l'aimant permanent 20 et la cavité 26. Cependant, sans précaution particulière, la disposition de la colle reste aléatoire et en cas de mise en oeuvre d'une colle à fort pouvoir d'adhésion, lors de l'extraction de l'aimant permanent 20, une rupture incontrôlée de l'aimant permanent 20 a de fortes chances de se produire. Pour pallier cette difficulté, l'invention prévoit de combiner une zone de collage de l'aimant permanent 20 dans la cavité 26 et une forme particulière de l'aimant permanent 20 favorisant sa rupture en bordure de la zone où l'aimant permanent 20 est collé. La forme particulière forme une amorce de rupture. Plus précisément, lors de l'extraction de l'aimant permanent 20, en le soumettant à un effort ou à un choc donné dans une direction parallèle à l'axe de rotation 16, l'amorce de rupture favorise la rupture de l'aimant permanent 20 dans une zone prédéfinie de celui-ci. L'amorce de rupture divise une surface extérieure de l'aimant permanent 20 en deux parties 20a et 20b. D'un côté de l'amorce de rupture, la partie de l'aimant permanent 20 délimitée par la partie de surface 20a et par la rupture, maintenue par la colle, reste solidaire du circuit magnétique 22 et de l'autre côté de l'amorce de rupture, la partie de l'aimant permanent 20 délimitée par la partie de surface 20b et par la rupture et non maintenue par la colle peut plus facilement être extraite du circuit magnétique 22.

L'effort ou le choc appliqué sur l'aimant permanent 20 peut être réparti sur une face frontale de l'aimant permanent 20, face perpendiculaire à l'axe de rotation 16 ou appliqué ponctuellement sur cette face. Qu'il soit réparti ou appliqué ponctuellement, il est avantageux que l'effort ou le choc soit appliqué sur la partie de l'aimant permanent 20 non maintenue au circuit magnétique 22 afin que lors de la rupture, cette partie non maintenue, puisse glisser hors de la cavité 26. Ainsi l'effort ou le choc appliqué permet à la fois de rompre l'aimant permanent 20 et de l'extraire de la cavité 26. Alternativement, il est possible de dissocier la rupture de l'aimant permanent 20 et son extraction. A cet effet, l'effort ou le choc appliqué à l'aimant permanent 20 et nécessaire à sa rupture peut être localisé ou réparti sur l'aimant permanent 20 à différentes positions sur celui-ci. La présence de l'amorce de rupture permet de concentrer les contraintes dans l'aimant permanent pour permettre sa rupture.

Différentes formes particulières peuvent être mises en oeuvre pour réaliser une amorce de rupture. Il peut s'agir d'une forme interne à l'aimant permanent 20, comme par exemple des zones correspondant à un évidement débouchant ou ne débouchant pas en surface de l'aimant résultant d'un manque de matière localisée (bulle noyée dans le matériau de l'aimant permanent, rainure, piqure, encoche, indentation etc ...). Les deux parties 20a et 20b de la surface extérieure de l'aimant permanent 20 sont définies en fonction de la forme de l'amorce de rupture. En cas de forme interne les parties sont délimitées par une ligne de la surface extérieure où l'aimant permanent est prévu pour se rompre. Il peut également s'agir d'une irrégularité ou une discontinuité géométrique dans une zone de la surface extérieure 31 de l'aimant permanent favorisant une concentration de contrainte mécanique lorsque l'aimant permanent est soumis à un effort ou à un choc extérieur (effet d'entaille). L'irrégularité de forme peut être proéminent ou en creux par rapport à la forme générale de la surface extérieure 31 de l'aimant permanent 20. Plus précisément, en ce qui concerne la surface extérieure 31 de l'aimant permanent 20, une entaille anguleuse permet d'entrainer une concentration de contrainte lorsque l'aimant permanent 20 est soumis à un effort ou à un choc. D'autres formes peuvent bien entendu être mises en oeuvre. La définition de cette forme peut être modélisée par simulation par éléments finis des contraintes locales dans l'aimant permanent 20 lorsqu'il est soumis à un effort ou à un choc en vue de son extraction. La simulation permet de définir la zone de la surface de l'aimant permanent où doit se produire la rupture.

Dans l'exemple représenté, où des lumières sont présentes, l'amorce de rupture est formée par des encoches réalisées dans la surface extérieure 31 de l'aimant permanent 20. Les encoches sont situées au voisinage immédiat du bord de chacune des lumières 28 et 30. Plus précisément, au voisinage de la lumière 28, l'aimant permanent 20 comprend deux encoches 32 et 34 et au voisinage de la lumière 30, deux encoches 36 et 38.

La figure 3 représente l'aimant permanent 20 seul, en coupe dans un plan perpendiculaire à l'axe de rotation 16. On y distingue une vue agrandie d'un exemple de réalisation de l'encoche 34, en forme de la lettre V.

Les lumières 28 et 30 ont essentiellement une fonction magnétique pour la machine électrique 10. L'invention peut être mise en oeuvre avec ou sans ces lumières. Il est cependant avantageux de profiter de la présence d'une ou plusieurs lumières par cavité dans le cadre de l'invention. Plus précisément, l'aimant permanent 20 peut être maintenu au circuit magnétique 22 par collage dans une des lumières 28 et 30 ou dans les deux lumières. Plus précisément, lors de la réalisation du rotor 14, l'aimant permanent 20 est inséré dans sa cavité 26 dans un mouvement de translation parallèlement à l'axe 16. Une fois l'aimant permanent 20 mis en place, les lumières 28 et 30 sont remplies de colle pour assurer le maintien en position de l'aimant permanent 20. Il est possible de ne remplir qu'une seule des lumières 28 ou 30 avec de la colle. Dans ce cas seules les encoches associées à la lumière correspondante sont nécessaires. Il est également possible de ne mettre en oeuvre qu'une seule encoche au niveau d'un des bords de la lumière. La ou les encoches sont dimensionnées pour permettre une rupture contrôlée de l'aimant permanent 20 lors de son retrait du circuit magnétique 22. Dans l'exemple d'un aimant permanent 20 à quatre encoches, deux ruptures s'effectuent le long du plus court chemin séparant deux encoches, d'une part entre les encoches 32 et 34 et d'autre part entre les encoches 36 et 38.

La réalisation d'une amorce de rupture sur la surface extérieure 31 de l'aimant permanent 20 sous forme d'une irrégularité de forme présente un autre avantage. En effet, une forme anguleuse de l'amorce de rupture contribue à limiter la propagation de la colle sur la surface extérieure 31 de l'aimant permanent 20. En d'autres termes, la présence de l'amorce de rupture permet de maintenir la colle d'un côté seulement de l'amorce de rupture et de limiter sa propagation, notamment par capillarité de l'autre côté de l'amorce de rupture. Dans le cas d'une mise en place de la colle dans une des lumières 28 ou 30, éventuellement dans les deux lumières, il est avantageux de disposer une encoche au niveau de chacun des bords de la lumière, bords s'étendant parallèlement à l'axe de rotation 16. Sur la figure 2, les bords 40 et 42 ont été repérés pour la lumière 28.

En partie droite de la figure 2, l'aimant permanent 20 a été en partie extrait du circuit magnétique après rupture d'une part au niveau des encoches 32 et 34 et d'autre part au niveau des encoches 36 et 38. Une partie 44 de l'aimant permanent 20 subsiste dans la lumière 28 et une partie 46 de l'aimant permanent 20 subsiste dans la lumière 30. Les parties 44 et 46 sont maintenues solidaires du circuit magnétique 22 par la colle présente dans chacune des lumières 28 et 30.

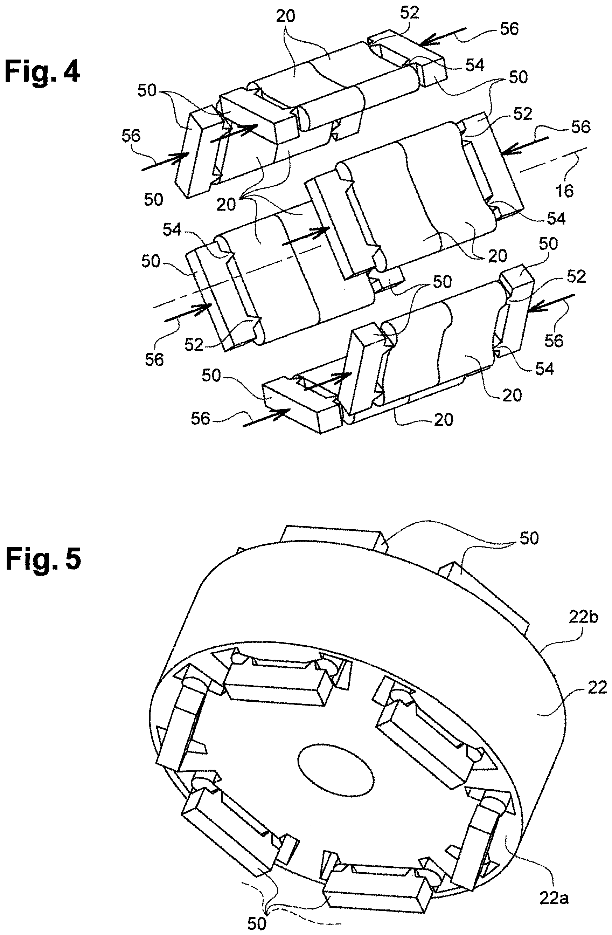

L'effort ou le choc extérieur peut être appliqué directement sur l'aimant permanent 20 ou par l'intermédiaire d'un outillage particulier. La figure 4 représente un exemple d'outillage 50 permettant de faciliter la rupture des aimants permanents 20. La figure 5 représente les mêmes aimants permanents assemblés dans le circuit magnétique 22 en présence de l'outillage 50.

Les figures 4 et 5 illustrent une machine électrique dont le rotor 16 comprend six pôles magnétiques d'aimant permanents 20. Il est bien entendu que l'invention peut être mise en oeuvre quel que soit le nombre de pôles. Dans l'exemple représenté, chaque pôle magnétique est formé à l'aide de deux aimants permanents 20 alignés parallèlement à l'axe de rotation 16.

L'outillage 50 comprend une fourchette à deux dents 52 et 54. Chacune des dents est configurée pour prendre appui sur un des aimants permanents 20 au niveau de la zone où l'aimant permanent 20 est prévu pour se rompre. Alternativement, il est possible de prévoir un outillage permettant d'appliquer l'effort ou le choc à distance de l'amorce de rupture. Cette distance entre l'application de l'effort ou le choc et l'amorce de rupture peut être imposée par des formes particulières de la machine électrique. En cas d'application de l'effort ou du choc à distance de l'amorce de rupture, les contraintes générées par l'effort ou le choc dans le matériau de l'aimant permanent 20 vont se concentrer au niveau de l'amorce de rupture et permettre à l'aimant permanent de se rompre au niveau de l'amorce de rupture. Il reste cependant avantageux d'appliquer l'effort ou le choc directement au niveau de la zone où l'aimant permanent 20 est prévu pour se rompre.

En appliquant un effort ou un choc 56, dont la direction est parallèle à l'axe de rotation 14, sur la fourchette 50 en appui contre l'aimant permanent 20, celui-ci se rompt dans les zones prévues par la présence des amorces de rupture. En cas d'une seule zone de rupture par aimant permanent 20, l'outillage ne comprend qu'une seule dent. De façon plus générale, l'outillage comprend autant de dents que de zones de rupture dans un même aimant permanent 20.

Deux aimants permanents 20 étant alignés, il est alors utile de répéter l'application de l'effort ou du choc 56 sur les faces accessibles des aimants permanents 20 par les faces latérales du circuit magnétique 22. Sur les figures 4 et 5, des outillages 50 identiques sont représentés en regard de chaque aimant permanent 20. Il est possible de n'utiliser qu'un seul outillage que l'on déplace en regard chaque aimant permanent.

L'outillage 50 peut comprendre une tête, non représentée sur les figures 4 et 5 regroupant autant de fourchettes que de pôles magnétiques du rotor 14. Plus précisément, dans l'exemple représenté, la tête comprend alors six fourchettes 50. La tête et ses six fourchettes peuvent être mise en oeuvre sur la première face latérale 22a du circuit magnétique 22 puis sur la seconde face latérale 22b du circuit magnétique 22. Les faces latérales 22a et 22b sont perpendiculaires à l'axe de rotation 16.

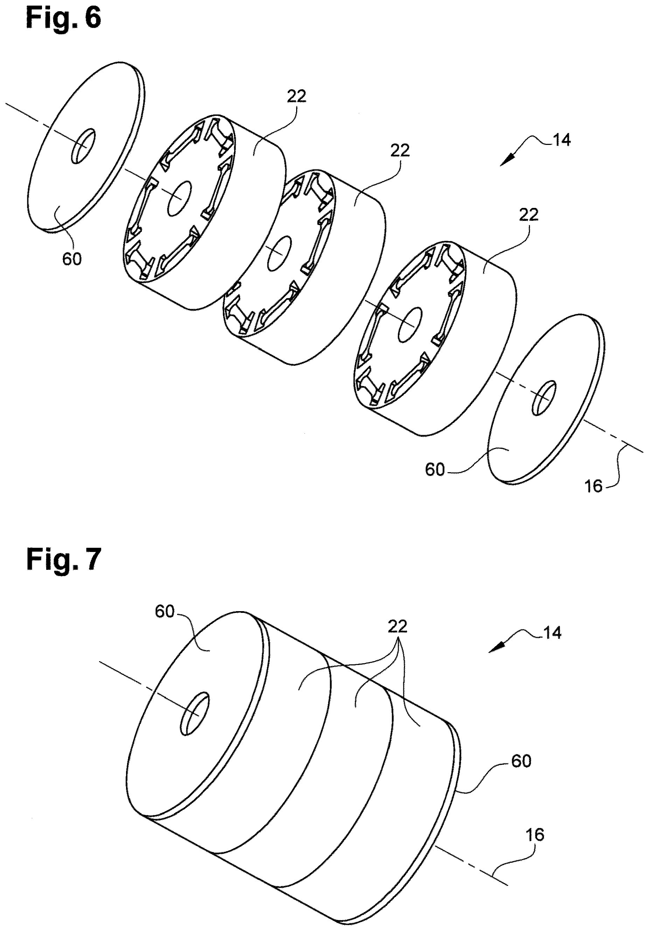

La figure 6 représente en vue éclatée une variante de rotor 14 et la figure 7 représente ce même rotor assemblé. Comme on l'a vu plus haut à l'aide des figures 4 et 5, il peut être utile de prévoir plusieurs aimants permanents 20 alignés pour former un pôle magnétique du rotor 14. Au-delà de deux aimants permanents 20 alignés dans un même circuit magnétique 22, il peut être difficile de rompre de façon maitrisée les aimants permanents qui ne sont pas accessibles directement par les faces latérales du circuit magnétique 22. Pour pallier ce problème, il est possible de prévoir des circuits magnétiques 22 ne recevant qu'au maximum deux aimants permanent alignés par pôle magnétique. Pour réaliser un rotor devant être équipé de plus de deux aimants permanents 20 alignés, le rotor 14 comprend plusieurs circuits magnétiques alignés selon l'axe de rotation 16. Trois circuits magnétiques 22 sont représentés dans l'exemple en figures 6 et 7. Il est bien entendu que cette variante peut être mise en oeuvre quel que soit le nombre de circuits magnétiques alignés.

Un flasque 60 peut venir obturer les cavités 26 recevant les aimants permanents 20 à chacune des extrémités axiales du rotor 14.

Les aimants permanents 20 peuvent être réalisés par injection de poudre dans un moule ayant une empreinte de forme complémentaire à celle de l'aimant permanent 20. Après moulage la poudre est frittée. Ce type de procédé présente l'avantage de permettre la réalisation de détails précis, dont notamment les amorces de rupture, dans la forme de l'aimant permanent 20. Ce procédé de fabrication présente également l'avantage de permettre la réalisation d'aimants permanents en fortes cadences de production. Tout autre procédé de réalisation des aimants permanents 20 peut être mis en oeuvre dans le cadre de l'invention.

## Revendications

1. Machine électrique à rotor à aimants permanents encastrés et à extractions d'aimants facilitée, le rotor (14) pouvant tourner autour d'un axe de rotation (16) par rapport à un stator (12) de la machine électrique (10), le rotor (14) comprenant un circuit magnétique (22) et au moins un aimant permanent (20), le circuit magnétique (22) étant configuré pour guider le flux magnétique généré par l'aimant permanent (20), l'aimant permanent (20) s'étendant selon l'axe de rotation (16) et présentant une forme générale de section radiale adaptée à générer le flux magnétique, le circuit magnétique (22) comprenant une cavité (26) configurée pour contenir l'aimant permanent (20), la cavité (26) étant au contact de l'aimant permanent (20),
dans laquelle l'aimant permanent (20) comprend au moins une amorce de rupture (32, 34, 36, 38), s'étendant parallèlement à l'axe de rotation et permettant la rupture de l'aimant permanent (20) lorsqu'il est soumis à un effort ou un choc (56) donné s'exerçant dans une direction parallèle à l'axe de rotation (16), l'amorce de rupture (32, 34, 36, 38) divisant une surface extérieure de l'aimant permanent (20) en deux parties (20a, 20b),
et dans laquelle, l'aimant permanent (20) est maintenu au circuit magnétique (22) par collage sur une des parties (20a) seulement de la surface extérieure de l'aimant permanent (20).

2. Machine électrique selon la revendication 1, dans laquelle l'amorce de rupture est une irrégularité de forme (32, 34, 36, 38) dans la surface extérieure (31) de l'aimant permanent (20).

3. Machine électrique selon la revendication 2, dans laquelle l'irrégularité de forme est une encoche (32, 34, 36, 38) dans la surface extérieure (31) de l'aimant permanent (20).

4. Machine électrique selon l'une des revendications précédentes, dans laquelle le circuit magnétique (22) comprend au moins une lumière (28, 30) s'ouvrant sur la cavité (26), dans la lumière (28, 30) une surface extérieure (31) de l'aimant permanent (20) est à distance du circuit magnétique (22) de façon à former une barrière au flux magnétique généré par l'aimant permanent (20), dans laquelle, l'aimant permanent (20) comprend deux encoches (32, 34, 36, 38) s'étendant parallèlement à l'axe de rotation (16) et formant une amorce de rupture permettant la rupture de l'aimant permanent (20) lorsqu'il est soumis à un effort ou à un choc (56) donné s'exerçant dans une direction parallèle à l'axe de rotation (14), les deux encoches étant situées au voisinage immédiat de bords (40, 42) de la lumière (28, 30),
et dans laquelle l'aimant permanent (20) est maintenu au circuit magnétique (22) par collage dans la lumière (28, 30).

5. Machine électrique selon l'une des revendications précédentes, dont le rotor (14) comprend plusieurs circuits magnétique (22) empilés selon l'axe de rotation (16), chacun des circuits magnétiques (22) contenant au moins une série de deux aimants permanents (20) identiques alignés parallèlement à l'axe de rotation (16),
dans laquelle les aimants permanents (20) comprennent au moins une amorce de rupture (32, 34, 36, 38) s'étendant parallèlement à l'axe de rotation et permettant la rupture des aimants permanents (20) lorsqu'ils sont soumis à un effort ou à un choc (56) donné s'exerçant dans une direction parallèle à l'axe de rotation (16),
et dans laquelle, les aimants permanents (20) sont maintenus au circuit magnétique (22) par collage d'un côté seulement de l'amorce de rupture (32, 34, 36, 38).

6. Outillage (50) configuré pour rompre un aimant permanent (20) d'une machine électrique (10) selon l'une des revendications précédentes, comprenant au moins une dent (52, 54) configurée pour prendre appui sur l'aimant permanent (20) au niveau d'une zone où l'aimant permanent (20) est prévu pour se rompre.
